# FASCICULE DE BREVET EUROPEEN

(11) **EP 3 063 025 B1**
(45) Date de publication et mention de la délivrance du brevet: **15.07.2020**
(21) Numéro de dépôt: 14789806.8
(22) Date de dépôt: 21.10.2014
(51) Int. Cl.: B60H 1/00, B60H 3/06, B60H 3/00

(54) **SYSTÈME DE DÉSODORISATION DE L'HABITACLE D'UN VÉHICULE AUTOMOBILE**
SYSTEM ZUR DESODORIERUNG DER FAHRGASTZELLE EINES KRAFTFAHRZEUGES
SYSTEM FOR DEODORISING THE PASSENGER COMPARTMENT OF A MOTOR VEHICLE

(30) Priorité: 31.10.2013 FR 1360696
(43) Date de publication de la demande: 07.09.2016
(73) Titulaire: RENAULT s.a.s., 92100 Boulogne-Billancourt (FR)
(72) Inventeur: BOUCHARD, Laurent, 91190 Gif Sur Yvette (FR); PARPAIS, Sylvain, 78610 Auffargis (FR)
(86) Numéro de dépôt international: PCT/EP2014/072531
(87) Numéro de publication internationale: WO 2015/062914

(56) Documents cités:
- EP-A1- 0 051 839
- US-A- 5 074 463
- US-A1- 2008 034 767
- US-A1- 2012 077 426
- US-A1- 2012 152 515

## Description

L'invention a pour objet les systèmes de distribution d'air dans des environnements fermés, et plus particulièrement des systèmes de distribution d'air dans des habitacles automobiles. De tels systèmes de distribution d'air permettent de faire entrer de l'air frais à l'intérieur de l'habitacle, en laissant sortir l'air vicié. Ils permettent également de modifier certaines propriétés physiques de l'air circulant à l'intérieur du véhicule, par exemple en le réchauffant à l'aide d'un aérotherme, ou en le rafraîchissant à l'aide d'un système de climatisation. L'air circulant à l'intérieur de l'habitacle peut également être ionisé, et/ou débarrassé d'une partie de son humidité. Le confort des occupants du véhicule dépend, entre autres paramètres, de la possibilité de supprimer « les mauvaises odeurs », ces mauvaises odeurs pouvant être d'origines diverses, du sandwich que mange le voisin de siège aux odeurs et gaz d'échappement entrant dans l'habitacle lorsque le véhicule se trouve piégé dans un embouteillage sous un tunnel par exemple.

Des hottes filtrantes permettant d'éliminer certains types d'odeurs existent, mais leur positionnement à l'intérieur de l'habitacle est délicat et risque d'empiéter sur les autres équipements de sécurité et de confort disposés autour ou face aux occupants du véhicule.

Du fait du peu d'espace disponible dans l'habitacle pour une telle hotte, celle-ci ne peut être configurée que pour être traversée par des débits d'air limités, et l'efficacité du système de désodorisation est alors elle aussi restreinte.

En cas d'odeurs provenant de l'intérieur même du véhicule, il existe la ressource d'ouvrir les fenêtres, mais une telle manœuvre peut avoir un effet inverse de celui recherché si l'on se trouve au milieu d'un embouteillage ou d'une zone polluée par exemple.

La publication US2012/152515 décrit quant à lui un procédé conforme au préambule de la revendication 1.

En outre, il est déconseillé d'ouvrir l'habitacle à un fort flux d'air extérieur si la climatisation est en marche par exemple.

L'invention a pour but de proposer un système et un procédé de désodorisation d'un habitacle de véhicule qui peut être mis en place pour un coût très faible, qui peut être facilement adapté sur des véhicules déjà en cours de production et qui est capable d'apporter un net gain de confort olfactif aux occupants du véhicule.

A cette fin, l'invention propose un procédé de gestion de la distribution d'air dans l'habitacle d'un véhicule automobile, l'habitacle comprenant un circuit de conditionnement d'air muni d'un pulseur, d'un filtre à air, d'un échangeur de conditionnement conçu pour modifier au moins une caractéristique physique de l'air traversant l'échangeur. Dans ce procédé on déclenche une circulation forcée de l'air dans le circuit de conditionnement et au travers du filtre à air au moyen du pulseur, si le conducteur du véhicule actionne une première commande de conditionnement de l'air, et on déclenche également une circulation forcée, en circuit fermé, de l'air dans le circuit de conditionnement, pendant une durée minimale prédéfinie et à un débit plus élevé que lors de l'actionnement de la première commande de conditionnement, si le conducteur du véhicule actionne une seconde commande distincte de la première commande. De manière avantageuse, la seconde commande est désignée au conducteur comme permettant de réduire les odeurs dans l'habitacle du véhicule. Selon un mode de réalisation préféré, l'échangeur de conditionnement est un condenseur de climatisation. Par pulseur, on entend un système motorisé apte à imposer une circulation d'air forcée dan le circuit. Par circuit fermé, on entend que l'on ne fait pas entrer de l'air extérieur au véhicule dans l'habitacle pendant la circulation en circuit fermé. La première commande de conditionnement peut être par exemple une commande de climatisation, et ne provoque pas systématiquement une circulation en circuit fermé, même si les entrées d'air extérieures sont a priori limitées. La première commande de conditionnement n'est a priori pas soumise à une condition de durée minimale de la circulation d'air forcée. Le filtre est un filtre ayant la capacité de piéger certaines espèces chimique odorantes ou et/ou certaines tailles de particules, par exemple un filtre contenant du charbon de bois actif.

Avantageusement, lors de l'actionnement de la seconde commande, on ne déclenche pas une circulation forcée en circuit fermé de l'air dans le circuit de conditionnement tant que des conditions prédéfinies d'hygrométrie de l'air de l'habitacle, de température de l'air intérieur à l'habitacle et de température de l'air extérieur à l'habitacle correspondant à un niveau de risque de formation de buée sur le pare-brise sont réunies.

De préférence, lors de l'actionnement de la seconde commande, on ne déclenche pas une circulation forcée en circuit fermé de l'air dans le circuit de conditionnement tant qu'une troisième commande est activée, qui est désignée au conducteur comme permettant d'améliorer la visibilité au travers du pare-brise du véhicule.

On peut afficher un message à l'attention du conducteur quand malgré l'actionnement de la seconde commande, toutes les conditions ne sont pas réunies pour autoriser le déclenchement de la circulation forcée d'air en circuit fermé dans le circuit de conditionnement, pendant la durée minimale prédéfinie.

On peut également déclencher la circulation forcée en circuit fermé de l'air dans le circuit de conditionnement, pendant la durée minimale prédéfinie, si un détecteur de qualité de l'air de l'habitacle détecte une valeur de qualité de l'air dépassant un seuil prédéfini.

Selon un mode de mise en œuvre préféré, au début du déclenchement de la circulation forcée en circuit fermé de l'air dans le circuit de conditionnement pour la durée minimale prédéfinie, on augmente pendant au moins plusieurs secondes le débit d'air du pulseur au-delà du débit prévu en moyenne pendant la durée minimale prédéfinie, de manière à rendre audible la différence de régime de fonctionnement du pulseur aux occupants du véhicule.

De préférence, la circulation forcée de l'air dans le circuit de conditionnement, pendant la durée minimale prédéfinie, se fait par défaut en circuit fermé, et se fait en revanche avec un recyclage partiel de l'air de l'habitacle pour des combinaisons particulières de conditions d'hygrométrie de l'air de l'habitacle, des conditions de température de l'air extérieur à l'habitacle et de l'air intérieur à l'habitacle.

On peut ne pas lancer la circulation forcée de l'air dans le circuit de conditionnement, pendant la durée minimale prédéfinie, si la température de l'air extérieur au véhicule est négative.

Selon un autre aspect, l'invention propose un système de gestion de la distribution d'air dans l'habitacle d'un véhicule automobile, comprenant un filtre à air et un circuit de conditionnement d'air muni d'un pulseur, d'un échangeur de conditionnement conçu pour modifier au moins une caractéristique de l'air traversant l'échangeur, et d'un circuit d'air permettant, au moyen du pulseur, de faire circuler de manière forcée l'air en circuit fermé à l'intérieur de l'habitacle en traversant le filtre à air. Le système comprend une unité de commande configurée pour déclencher une circulation en circuit fermé de l'air dans le circuit de conditionnement si le conducteur du véhicule actionne une première commande de conditionnement de l'air, l'unité de commandé étant en outre configurée pour déclencher une circulation forcée en circuit fermé de l'air dans le circuit de conditionnement et au travers du filtre à air, pendant une durée minimale prédéfinie et à un débit plus élevé que lors de l'actionnement de la première commande de conditionnement, si le conducteur du véhicule actionne une seconde commande distincte de la première commande. La commande peut être désignée au conducteur comme permettant de réduire les odeurs dans l'habitacle du véhicule.

Le système de gestion peut en outre comprendre une unité de détection d'un risque d'embuage des vitres du véhicule, et l'unité de commande peut être configurée pour annuler le lancement de la circulation forcée en circuit fermé de l'air dans le circuit de conditionnement, pendant la durée minimale prédéfinie, si le risque d'embuage est supérieur à un seuil (ou, autrement dit, si la visibilité prévisible est inférieure à un autre seuil).

D'autres buts, caractéristiques et avantages de l'invention apparaîtront à la lecture de la description suivante, donnée uniquement à titre d'exemple nullement limitatif, et faite en référence aux dessins annexés, sur lesquels :
- la figure 1 est une représentation schématique d'un système de distribution d'air suivant l'invention,
- la figure 2 est un algorithme simplifié de fonctionnement d'un système de distribution d'air selon l'invention,

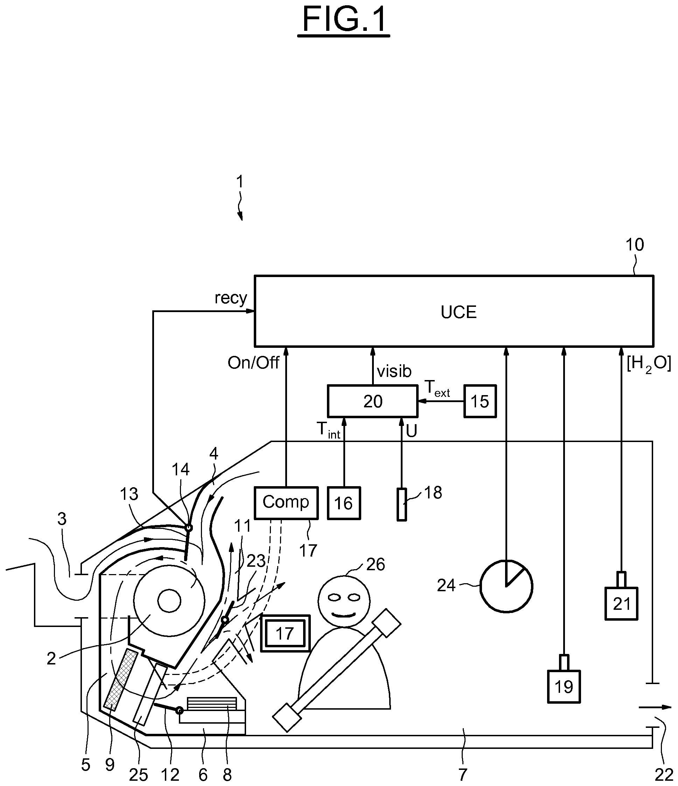

Tel qu'illustré sur la figure 1, un système de distribution d'air 1 de véhicule automobile peut comprendre un pulseur d'air 2, un premier conduit amont 3, un second conduit amont 4, un conduit de conditionnement 5, un volet de recyclage 13 muni d'un moteur pas à pas 14, et une unité de commande électronique (UCE) 10.

Le pulseur d'air 2 est apte à envoyer de l'air vers le conduit de conditionnement 5, en aspirant cet air alternativement à partir du premier conduit amont 3 relié à une prise d'air extérieure, qui peut par exemple se trouver dans la boîte à eau du véhicule, et alternativement à partir du second conduit amont 4 relié à une prise d'air intérieure à l'habitacle 7 du véhicule, qui peut par exemple se trouver au niveau des pieds des passagers ou du conducteur, ou en arrière des sièges des passagers.

Le volet de recyclage 13 placé entre le premier conduit amont, le second conduit amont et le conduit de conditionnement 5, permet de faire varier simultanément les sections de passage du premier conduit amont 3 et du second conduit amont 4. En fonction d'une position angulaire α du volet de recyclage 13, la section de passage d'air du premier conduit amont 3 peut être réduite au profit de l'ouverture d'une section de passage d'air plus importante du second conduit amont 4 et inversement. On choisit dans la suite de la description, de définir α de manière à ce qu'une augmentation de α corresponde à un accroissement de la proportion d'air frais admis dans l'habitacle. Une valeur nulle de α correspond à une circulation d'air en circuit fermé dans l'habitacle.

Le volet de recyclage 13 est muni d'un moteur 14 qui est relié à l'unité de commande électronique (UCE). 10. Sur le trajet du conduit de conditionnement 5 est disposé un échangeur de climatisation 9, qui refroidit l'air qui le traverse quand un système de climatisation comprenant l'échangeur est activé. Dans le conduit de conditionnement 5, est également disposé un filtre à air 25 qui est configuré pour retenir certaines espèces gazeuses et/ou pour retenir des particules fines.

Un volet de mixage 12 permet d'orienter le flux issu du conduit de conditionnement 5, soit vers un conduit de chauffage 6 traversant un radiateur 8, soit directement vers différents conduits de distribution 11. La proportion de flux d'air dans chacun des conduits de distribution est répartie à l'aide d'un volet de distribution 23. La proportion d'air traversant le radiateur 8 peut être ajustée en fonction de différentes positions du volet de mixage 12. L'air peut traverser l'échangeur de climatisation sans être refroidi si le système de climatisation n'est pas activé. Dans certaines variantes de réalisation, la climatisation peut être réversible et l'échangeur 9 peut être par intervalles de temps utilisé pour réchauffer l'air qui le traverse.

Le système comprend, un capteur de température extérieur à l'habitacle 15, un capteur de température intérieur à l'habitacle 16, et un capteur d'hygrométrie (ou concentration de vapeur d'eau) 18, reliés à un estimateur de visibilité 20, qui à partir des valeurs de températures d'air intérieur et extérieur au véhicule, et du degré d'hygrométrie, calcule une variable "visib" qui peut traduire le niveau de risque selon lequel la buée se forme sur le pare brise du véhicule en limitant la visibilité au travers du pare brise. Dans l'exemple de réalisation illustré, la variable "visib" est par exemple inférieure à un seuil "lim" si de la buée risque de se former sur le pare brise. Selon d'autres variantes de réalisation, la variable visib peut devenir supérieure à un seuil "lim" si de la buée risque de se former sur le pare brise, ou être une variable booléenne. Le capteur d'hygrométrie peut être par exemple un capteur de type résistif.

Le système comprend une interface homme machine 17 permettant d'afficher des informations à l'attention du conducteur 26 du véhicule.

Le système comprend une sortie d'air 22 par laquelle l'air présent à l'intérieur de l'habitacle peut sortir de manière à ce que sa pression reste équilibrée avec la pression extérieure au véhicule. Cette sortie d'air 22 peut éventuellement être constituée uniquement de zones de fuite ménagées dans les zones périphériques de l'habitacle. Des dispositifs anti-retour connus peuvent équiper la sortie d'air ou les zones de fuite de manière à empêcher ou limiter des entrées d'air par l'entrée d'air/les zones de zones de fuite. Le dispositif anti-retour peut selon les variantes de réalisation, comprendre des moyens passifs ou un volet motorisé.

L'unité de commande électronique 10 régule la position du volet de recyclage 13 de manière, à maintenir le degré d'humidité de l'air de l'habitacle en dessous d'un seuil, au dessus duquel seuil de la buée pourrait se former sur les vitres de l'habitacle. Le poste de conduite du véhicule est équipé d'une première commande 24 permettant au conducteur 26 d'actionner un système de climatisation comprenant l'échangeur 9, selon plusieurs intensités, voire selon plusieurs modes (rafraîchissement ou chauffage). Le poste de conduite du véhicule est équipé d'une seconde commande 19 permettant au conducteur 26 de lancer un cycle spécifique de désodorisation de l'habitacle du véhicule. La commande 19 peut être par exemple un bouton dédié comportant une indication ou un pictogramme évoquant la suppression des odeurs, ou une entrée d'un menu de commande tactile à affichage multiple, demandant le lancement d'un cycle de désodorisation. Selon les lieux de destination d'usage du véhicule, le programme peut être désigné comme un programme de filtrage des poussières de l'air, ou désigné comme un programme de dépollution, au lieu d'être désigné comme un programme de désodorisation.

Le poste de conduite du véhicule est équipé d'une troisième commande 21 permettant au conducteur 26 d'exprimer un besoin d'améliorer la visibilité au travers du pare-brise ou des vitres du véhicule. Les commandes 24, 19 et 21 sont reliées à l'UCE 10. Lorsque la commande 24 est activée, en fonction du mode de fonctionnement requis (en fonction du degré de rafraîchissement de l'air souhaité) une circulation forcée de l'air est déclenché par l'UCE 10 au travers de l'échangeur 9. L'échangeur 9 est alors également traversé par un fluide de climatisation permettant de prélever des calories sur l'air qui le traverse. Lorsque la commande 19 est activée, l'UCE déclenche une circulation forcée d'air qui se fait en circuit fermé à l'intérieur de l'habitacle du véhicule, et qui traverse le filtre 25. Suivant l'invention, le débit total d'air envoyé par le pulseur 2 lors de cette circulation forcée d'air est supérieur au débit d'air imposé lorsque le système de climatisation est actif. Le débit total d'air envoyé par le pulseur 2 lors de cette circulation forcée d'air peut être égal au débit d'air correspondant à un ou plusieurs mode de climatisation les plus intensifs, voire être supérieur aux débits d'air des modes de climatisation intensifs. Selon les modes de réalisation, lors de cette circulation forcée d'air, la position du volet 13 est partiellement fermée, ou de préférence est totalement fermée, de manière à éviter de faire entrer des espèces polluantes ou des poussières supplémentaires à l'intérieur du véhicule. Lors de cette circulation forcée d'air, la position des volets 12 et 23 peut être modifiée par rapport à leurs position avant l'actionnement de la commande 19, de manière à ne pas augmenter soudainement l'effet de chauffage de l'air ou de rafraîchissement de l'air arrivant dans l'habitacle, ou de manière à envoyer temporairement cet air à distance des occupants du véhicules, afin que les occupants ne ressentent pas une soudaines variation de température. Le débit de fluide réfrigérant dans l'échangeur 9 peut également être réduit ou stoppé pendant la phase de circulation d'air forcée déclenchée par la commande 19. Cette phase de circulation d'air forcée est maintenue pendant une période minimale prédéfinie, par exemple une durée comprise entre 4 min et 12 min, et de préférence comprise entre 6 et 10 min, par exemple une durée de l'ordre de 8 minutes. La durée peut être adaptée notamment en fonction de l'efficacité du filtre 25, et du débit retenu pour la circulation d'air forcée. Le débit d'air choisi pour la phase de circulation d'air forcée est limité par la capacité du pulseur, par les pertes de charge dans les circuits d'air et le ressenti (ressenti d'un "courant d'air") des occupants du véhicule. En imposant une circulation forcée à débit élevé et durant une durée minimale imposée, on met à profit des équipements existants, notamment le pulseur, le filtre et les circuits de circulation d'air, pour une fonction supplémentaire pour laquelle les systèmes de distribution d'air ne sont pas utilisés actuellement. Cette fonction supplémentaire est l'assainissement accéléré de l'air de l'habitacle, à la demande du conducteur, ou déclenchée par la détection d'une pollution de l'air par un capteur dédié. La circulation forcée à débit élevé et durant une durée minimale peut aussi être déclenchée lorsqu'un capteur spécifique détecte une teneur supérieure à un seuil d'une espèce chimique donnée.

Le filtre à air 25 peut comprendre un filtre à gaz du type à charbon actif, dont peuvent être équipés les systèmes de conditionnement d'air pour véhicule automobile. Les filtres à gaz au charbon actif utilisent du charbon actif aggloméré en grains, ou lié à des fibres constituant le filtre, le charbon actif permettant d'adsorber et de retenir les polluants gazeux qui autrement, entreraient dans l'habitacle et provoqueraient une gêne olfactive ou sanitaire pour les occupants du véhicule.

Ces filtres à charbon actif peuvent faire partie de filtres combinés comprenant une couche de charbon actif destinée à capter les polluants gazeux, et une couche de matière apte à filtrer les particules de petite taille (typiquement, les particules de l'ordre de la dizaine de microns). Les deux types de couches filtrantes peuvent être intégrées au sein d'une même texture de filtrage.

Le filtre peut être un filtre jetable ou un filtre destiné à une régénération périodique. Cette régénération peut par exemple être effectuée en soumettant le filtre à un flux d'air de température suffisamment élevée. Les molécules polluantes peuvent alors être désorbées et évacuées par le flux d'air de régénération. Suivant le type de filtre utilisé, comprenant généralement du charbon actif sous forme de poudre, d'agglomérés, de granulés ou de fibres, le réchauffage du charbon ou de l'air qui le balaye peut être assuré par exemple par un dispositif amont, ou par une résistance électrique noyée dans le filtre.

La phase de réchauffage peut être synchronisée avec une inversion du sens de circulation de l'air dans l'habitacle. Le dispositif de régénération permet de rejeter vers l'extérieur l'air contenant les produits polluants désorbés. Ces phases de désorption sont effectuées périodiquement lors d'un démarrage du véhicule, en même temps que l'on purge certains canaux du système de conditionnement d'air. Lorsque le système de distribution d'air selon l'invention comprend un tel filtre associé à un dispositif de régénération périodique du filtre, une utilisation régulière et intense du filtre est possible sans qu'il soit pour autant nécessaire de changer fréquemment le filtre.

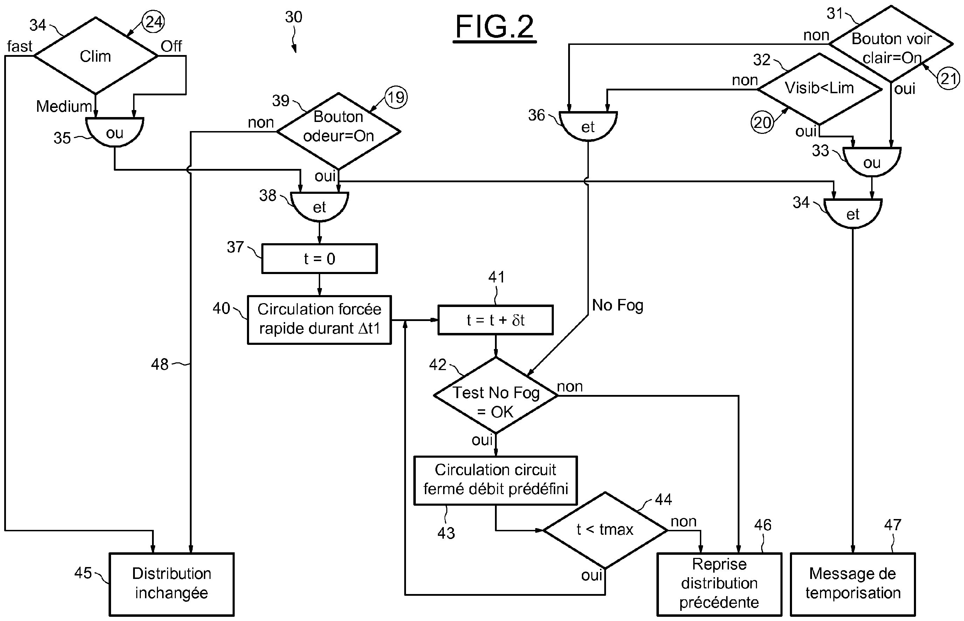

La figure 2 est un algorithme simplifié 30 de fonctionnement d'un système de distribution d'air selon l'invention. On retrouve sur la figure 2 des éléments communs à la figure 1, les mêmes éléments étant désignés par les mêmes références.

Tel qu'illustré sur la figure 2, l'unité de commande électronique 10 de la figure 1 surveille en permanence l'état du bouton 24 de commande du système de climatisation, l'état du bouton 19 permettant au conducteur de demander un cycle de désodorisation, l'état de la variable « visib » délivrée par l'estimateur de visibilité 20, et l'état du bouton 21 permettant au conducteur du véhicule de demander un cycle de distribution d'air permettant d'améliorer la visibilité au travers du pare-brise du véhicule.

L'unité de commande électronique 10 effectue ainsi un test 34 pour savoir si le bouton 24 de commande du système de climatisation se trouve en position éteinte (« off »), en position de fonctionnement dans une première position (« médium ») ou dans une seconde position de fonctionnement plus rapide (« fast »).

L'unité de commande électronique 10 effectue un test 39 pour savoir si le bouton 19 est dans une position enclenchée, effectue un test 31 pour savoir si le bouton 21 est en position enclenchée et effectue un test 32 par exemple pour vérifier si la variable « visib » est inférieure à une limite prédéfinie qui peut par exemple être enregistrée dans une mémoire spécifique.

Dans l'exemple de réalisation illustré, l'unité de commande électronique 10 envoie les résultats des tests 31 et 32 sur un sommateur logique 33 puis sur un multiplicateur logique 34, qui reçoit sur son autre entrée le résultat du test 39. Si la sortie du multiplicateur 34 est positive, ce qui revient à dire que, à la fois le conducteur a appuyé sur le bouton 19 et sur le bouton 21, ou que le conducteur a appuyé sur le bouton 19 et simultanément l'unité de commande électronique 10 détecte qu'il y a un défaut de visibilité au travers du pare-brise du véhicule, alors l'unité de commande électronique 10 provoque l'affichage d'un message au niveau de l'interface homme-machine 17 pour avertir le conducteur que le programme de désodorisation ne peut être lancé dans les conditions actuelles.

Par programme de désodorisation, on entend la circulation d'air établie suivant un trajet fermé à l'intérieur de l'habitacle et des conduits d'air avec un débit prédéfini et pendant une durée prédéfinie, et de manière à passer par le filtre à air 25.

Lorsque le résultat du test 34 indique que la climatisation fonctionne à un débit élevé, que le résultat du test 39 soit positif ou négatif, l'unité de commande électronique 10 se met dans une configuration 45 et poursuit la distribution d'air dans l'habitacle du véhicule suivant le mode de fonctionnement déjà en cours.

Comme l'indique la flèche logique 48, le mode de distribution actuel 45, est de manière plus générale, celui qui s'établit par défaut quand le bouton 19 n'est pas activé, suite aux autres requêtes du conducteur (température, entrée d'air frais ou non, visibilité). Pour un ou plusieurs états du système de climatisation, qui sont représentés sur la figure 2 par les états « off » et « médium », lorsque simultanément un de ces états de climatisation est actif et que le bouton 19 est activé comme l'indique le test 39, l'unité de commande électronique 10 déclenche une étape 37 d'initialisation d'un cycle de désodorisation. Une variable booléenne de lancement de l'étape d'initialisation 37 peut par exemple être obtenue en additionnant, à l'aide d'un sommateur 38, une variable logique issue du test 39 et une variable booléenne issue d'un test 35, le test 35 vérifiant si au moins un des états du dispositif de climatisation compatible avec le lancement du programme de désodorisation, est actif.

Si le résultat du sommateur 38 est positif, à l'étape 37 on initialise à zéro un compteur de temps t, et, dans certaines variantes de réalisation, on établit pendant une durée prédéfinie Δt1 une circulation forcée d'air en circuit fermé traversant le filtre 25 pendant un temps Δt1 assez court (de l'ordre d'une à plusieurs secondes), à un débit suffisamment élevé pour que les occupants du véhicule prennent conscience de manière auditive que le débit d'air a changé, et qu'un cycle spécifique de distribution d'air vient d'être lancé.

A une étape 41, on incrémente ensuite le compteur de temps t et on vérifie, par un test 42, que la poursuite du cycle de désodorisation reste pertinente par rapport aux autres paramètres de confort et de sécurité du véhicule. On vérifie par exemple le degré de visibilité au travers du pare-brise. Dans l'exemple illustré, le test 42 vérifie ainsi si une variable « No Fog » est positive, la variable « No Fog » arrivant d'un sommateur logique 36 qui reçoit en entrées respectivement les opposées logiques des résultats des tests 31 et 32.

Si le résultat du test 42 est positif, on poursuit la circulation en circuit fermé au travers du filtre 25 avec un débit prédéfini qui est inférieur au débit utilisé à l'étape 40, mais qui est au moins égal à celui d'un débit de circulation d'air de climatisation. De manière plus générale, la circulation en circuit fermé au travers du filtre 25 se fait à un débit -au niveau du filtre 25- relativement élevé, par exemple à un débit au moins 50% plus élevé que les autres circulations en circuit fermé programmés sur le véhicule, traversant le filtre 25, et actionnable sans limite de temps, et de préférence au moins deux fois plus élevé. Selon une autre variante de réalisation la circulation en circuit fermé au travers du filtre 25 se fait en imposant une puissance du pulseur au moins 50% plus élevée que les puissances du pulseur lors des autres circulations en circuit fermé programmés sur le véhicule, traversant le filtre 25, et actionnable sans limite de temps, et de préférence au moins deux fois plus élevée.

Ce débit d'air peut par exemple être choisi proche du débit maximal autorisé par les dimensions des circuits d'air et la puissance du pulseur 2, ou peut être choisi de manière à se trouver un peu en dessous du seuil où le bruit de circulation de l'air ou les vibrations du pulseur pourraient causer des nuisances sonores aux occupants du véhicule.

On teste ensuite, à une étape 44, si le compteur de temps t a atteint la durée maximale prédéfinie tₘₐₓ. Si cette durée maximale n'est pas atteinte, on retourne à l'étape 41 et on incrémente le compteur de temps t. Si la durée maximale tₘₐₓ est atteinte, l'unité de commande électronique 10 met le système dans une configuration 46 qui peut être soit une configuration mémorisée juste avant la mise en route du cycle de désodorisation, soit une configuration recalculée en fonction des autres paramètres d'environnement du véhicule, tels que les températures et les humidités de l'air intérieur/extérieur.

L'étape 46 peut également correspondre à une remise à zéro de la variable "bouton odeur" correspondant au test 39, et si besoin est, un repositionnement à l'état désactivé du bouton 19 si ce bouton est un bouton à déplacement mécanique. L'unité de commande électronique 10 peut également placer le système dans la configuration 46 si le résultat du test 42 vient à être négatif avant la fin de la durée tₘₐₓ théorique du cycle de désodorisation.

L'organigramme illustré en figure 2 n'est qu'un exemple de réalisation parmi beaucoup d'autres. Suivant les variantes de réalisation, on peut ne pas exécuter la circulation en mode forcé accéléré de l'étape 40 si l'on détecte dès l'activation du bouton 19 que les conditions de visibilité au travers du pare-brise ne sont pas compatibles avec un cycle complet de désodorisation.

L'invention ne se limite pas aux exemples de réalisation décrits et peut se décline en de nombreuses variantes. Selon les variantes de réalisation, le conduit traversé systématiquement par l'air entrant peut comprendre un radiateur 8 et ne pas comprendre d'échangeur de climatisation 9. Selon encore une autre variante de réalisation, le conduit sur le passage duquel est interposé le filtre à air 25 ne comprend pas d'échangeur thermique, mais comprend un dispositif destiné à modifier d'autres propriétés de l'air que la température (humidificateur, ioniseur...). Selon certaines variantes de réalisation, le conduit sur le passage duquel est interposé le filtre à air 25 n'est pas systématiquement traversé par l'air entrant dans l'habitacle ou lors de l'établissement d'une circulation d'un circuit fermé d'air à l'intérieur de l'habitacle. Le passage comprenant le filtre à air 25 peut être traversé par une circulation d'air en circuit fermé à l'intérieur de l'habitacle pour certaines configurations seulement de volets ou de systèmes de guidage d'air associés aux portions de canalisation du circuit d'air définissant les circuits de passage d'air possibles lors d'une circulation en circuit fermé.

Le filtre utilisé pour la désodorisation peut ne pas être un filtre associé à un système de climatisation mais un filtre associé à une autre fonction du circuit de distribution d'air. L'état de fonctionnement de cette autre fonction sera alors surveillé en priorité lors du lancement des programmes de désodorisation, pour adapter au besoin la circulation d'air spécifique associée, au cycle de désodorisation. L'initialisation à l'étape 40 puis la poursuite du cycle de circulation en circuit fermé impliquent, en fonction des configurations précédentes du circuit de distribution d'air, une mise en position adéquate des divers volets 12, 13, 23 permettant d'orienter la circulation d'air à l'intérieur du système.

Le procédé de gestion du système de distribution d'air d'un véhicule selon l'invention permet d'augmenter le confort des occupants du véhicule moyennant une adaptation minime de l'infrastructure du véhicule.

## Revendications

1. Procédé de gestion de la distribution d'air dans l'habitacle (7) d'un véhicule automobile, l'habitacle comprenant un circuit de conditionnement d'air muni d'un pulseur (2), d'un filtre à air (25), d'un échangeur de conditionnement (9) conçu pour modifier au moins une caractéristique physique de l'air traversant l'échangeur (9), dans lequel procédé on déclenche une circulation forcée de l'air dans le circuit de conditionnement et au travers du filtre à air (25) au moyen du pulseur (2), si le conducteur du véhicule actionne une première commande (24) de conditionnement de l'air, **caractérisé en ce que** si le conducteur du véhicule actionne une seconde commande (19) distincte de la première commande (24), on déclenche une circulation forcée en circuit fermé, traversant le filtre à air, de l'air dans le circuit de conditionnement, pendant une durée minimale prédéfinie spécifique à la seconde commande et à un débit plus élevé que lors de l'actionnement de la première commande de conditionnement (24).

2. Procédé de gestion selon la revendication 1, dans lequel, lors de l'actionnement de la seconde commande (19), on ne déclenche pas une circulation forcée en circuit fermé de l'air dans le circuit de conditionnement tant que des conditions prédéfinies d'hygrométrie de l'air de l'habitacle, de température de l'air intérieur à l'habitacle et de température de l'air extérieur à l'habitacle correspondant à un niveau de risque de formation de buée sur le pare-brise sont réunies.

3. Procédé de gestion selon la revendication 1, dans lequel, lors de l'actionnement de la seconde commande (19), on ne déclenche pas une circulation forcée en circuit fermé de l'air dans le circuit de conditionnement tant qu'une troisième commande (21) est activée, qui est désignée au conducteur comme permettant d'améliorer la visibilité au travers du pare-brise du véhicule.

4. Procédé de gestion selon l'une des revendications 2 ou 3, dans lequel on affiche (47) un message à l'attention du conducteur du véhicule quand lors de l'actionnement de la seconde commande (19), toutes les conditions ne sont pas réunies pour autoriser le déclenchement de la circulation forcée d'air en circuit fermé dans le circuit de conditionnement, pendant la durée minimale prédéfinie.

5. Procédé de gestion selon l'une quelconque des revendications précédentes, dans lequel on déclenche en outre la circulation forcée en circuit fermé de l'air dans le circuit de conditionnement, pendant la durée minimale prédéfinie, si un détecteur de qualité de l'air de l'habitacle détecte une valeur de qualité de l'air dépassant un seuil prédéfini.

6. Procédé de gestion selon l'une quelconque des revendications précédentes, dans lequel, au début du déclenchement de la circulation forcée en circuit fermé de l'air dans le circuit de conditionnement pour la durée minimale prédéfinie, on augmente pendant au moins plusieurs secondes (Δt1) le débit d'air du pulseur au-delà du débit prévu en moyenne pendant la durée minimale prédéfinie, de manière à rendre audible la différence de régime de fonctionnement du pulseur aux occupants du véhicule.

7. Procédé de gestion selon l'une quelconque des revendications précédentes, dans lequel la circulation forcée de l'air dans le circuit de conditionnement, pendant la durée minimale prédéfinie , se fait par défaut en circuit fermé, et se fait en revanche avec un recyclage partiel de l'air de l'habitacle pour des combinaisons particulières de conditions d'hygrométrie de l'air de l'habitacle, des conditions de température de l'air extérieur à l'habitacle et de l'air intérieur à l'habitacle.

8. Procédé de gestion selon l'une quelconque des revendications précédentes, dans lequel on ne lance pas la circulation forcée de l'air dans le circuit de conditionnement, pendant la durée minimale prédéfinie, si la température de l'air extérieur au véhicule est négative.

9. Système de gestion de la distribution d'air dans l'habitacle d'un véhicule automobile, comprenant un filtre à air (25) et un circuit de conditionnement d'air muni d'un pulseur (2), d'un échangeur de conditionnement (9) conçu pour modifier au moins une caractéristique de l'air traversant l'échangeur (9), et d'un circuit d'air permettant, au moyen du pulseur, de faire circuler de manière forcée l'air en circuit fermé à l'intérieur de l'habitacle en traversant le filtre à air, le système comprenant une unité de commande (10) configurée pour déclencher une circulation en circuit fermé de l'air dans le circuit de conditionnement si le conducteur du véhicule actionne une première commande de conditionnement de l'air, **caractérisé en ce que** l'unité de commandé est en outre configurée, si le conducteur du véhicule actionne une seconde commande sans actionner la première commande, pour déclencher une circulation forcée en circuit fermé de l'air dans le circuit de conditionnement et au travers du filtre à air, pendant une durée minimale prédéfinie spécifique à la seconde commande et à un débit plus élevé que lors de l'actionnement de la première commande de conditionnement.

10. Système de gestion selon la revendication précédente, comprenant en outre une unité de détection (20) d'un risque d'embuage des vitres du véhicule, dans lequel l'unité de commande (10) est configurée pour annuler le lancement de la circulation forcée en circuit fermé de l'air dans le circuit de conditionnement, pendant la durée minimale prédéfinie, si le risque d'embuage est supérieur à un seuil.

## Patentansprüche

1. Verfahren zur Verwaltung der Verteilung von Luft in der Fahrgastzelle (7) eines Kraftfahrzeugs, wobei die Fahrgastzelle einen Klimatisierungskreislauf enthält, der mit einem Gebläse (2), einem Luftfilter (25), einem Klimatauscher (9) versehen ist, der konzipiert ist, um mindestens ein physikalisches Merkmal der den Tauscher (9) durchströmenden Luft zu ändern, in welchem Verfahren eine Zwangsumwälzung der Luft im Klimatisierungskreislauf und durch den Luftfilter (25) hindurch mittels des Gebläses (2) ausgelöst wird, wenn der Fahrer des Fahrzeugs eine erste Betätigungseinrichtung (24) der Klimatisierung der Luft betätigt, **dadurch gekennzeichnet, dass**, wenn der Fahrer des Fahrzeugs eine zweite Betätigungseinrichtung (19) anders als die erste Betätigungseinrichtung (24) betätigt, eine den Luftfilter durchströmende Zwangsumwälzung in geschlossenem Kreislauf der Luft im Klimatisierungskreislauf während einer für die zweite Betätigungseinrichtung spezifischen vordefinierten minimalen Dauer und mit einem höheren Durchsatz als bei der Betätigung der ersten Klimatisierungs-Betätigungseinrichtung (24) ausgelöst wird.

2. Verwaltungsverfahren nach Anspruch 1, wobei bei der Betätigung der zweiten Betätigungseinrichtung (19) keine Zwangsumwälzung in geschlossenem Kreislauf der Luft im Klimatisierungskreislauf ausgelöst wird, so lange vordefinierte hygrometrische Bedingungen der Luft der Fahrgastzelle, der Temperatur der Luft innerhalb der Fahrgastzelle und der Temperatur der Luft außerhalb der Fahrgastzelle entsprechend einem Risikoniveau des Beschlagens der Windschutzscheibe vereint sind.

3. Verwaltungsverfahren nach Anspruch 1, wobei bei der Betätigung der zweiten Betätigungseinrichtung (19) keine Zwangsumwälzung in geschlossenem Kreislauf der Luft im Klimatisierungskreislauf ausgelöst wird, so lange eine dritte Betätigungseinrichtung (21) aktiviert ist, die dem Fahrer als die Verbesserung der Sichtbarkeit durch die Windschutzscheibe des Fahrzeugs erlaubend angezeigt wird.

4. Verwaltungsverfahren nach einem der Ansprüche 2 oder 3, wobei eine an den Fahrer des Fahrzeugs gerichtete Nachricht angezeigt wird (47), wenn bei der Betätigung der zweiten Betätigungseinrichtung (19) nicht alle Bedingungen zum Erlauben des Auslösens der Zwangsumwälzung von Luft in geschlossenem Kreislauf im Klimatisierungskreislauf während der vordefinierten Mindestdauer vereint sind.

5. Verwaltungsverfahren nach einem der vorhergehenden Ansprüche, wobei die Zwangsumwälzung in geschlossenem Kreislauf der Luft im Klimatisierungskreislauf außerdem während der vordefinierten minimalen Dauer ausgelöst wird, wenn ein Qualitätsdetektor der Luft der Fahrgastzelle einen Luftqualitätswert erfasst, der eine vordefinierte Schwelle überschreitet.

6. Verwaltungsverfahren nach einem der vorhergehenden Ansprüche, wobei zu Beginn des Auslösens der Zwangsumwälzung in geschlossenem Kreislauf der Luft im Klimatisierungskreislauf für die vordefinierte minimale Dauer während mindestens mehreren Sekunden (Δt1) der Luftdurchsatz des Gebläses über den im Mittel während der vordefinierten minimalen Dauer vorgesehenen Durchsatz erhöht wird, um den Unterschied des Betriebszustands des Gebläses für die Insassen des Fahrzeugs hörbar zu machen.

7. Verwaltungsverfahren nach einem der vorhergehenden Ansprüche, wobei die Zwangsumwälzung der Luft im Klimatisierungskreislauf während der vordefinierten minimalen Dauer standardmäßig in geschlossenem Kreislauf stattfindet, und im Gegensatz dazu mit einer teilweisen Rückführung der Luft der Fahrgastzelle für besondere Kombinationen von hygrometrischen Bedingungen der Luft der Fahrgastzelle, der Temperaturbedingungen der Luft außerhalb der Fahrgastzelle und der Luft innerhalb der Fahrgastzelle erfolgt.

8. Verwaltungsverfahren nach einem der vorhergehenden Ansprüche, wobei die Zwangsumwälzung der Luft im Klimatisierungskreislauf während der vordefinierten minimalen Dauer nicht gestartet wird, wenn die Temperatur der Luft außerhalb des Fahrzeugs negativ ist.

9. System zur Verwaltung der Verteilung von Luft in der Fahrgastzelle eines Kraftfahrzeugs, das einen Luftfilter (25) und einen mit einem Gebläse (2), einem Klimatauscher (9), der konzipiert ist, mindestens ein Merkmal der den Tauscher (9) durchströmenden Luft zu ändern, und einem Luftkreislauf versehenen Klimatisierungskreislauf enthält, der es mittels des Gebläses ermöglicht, die Luft im Inneren der Fahrgastzelle zwangsweise in geschlossenem Kreislauf umzuwälzen, indem sie den Luftfilter durchströmt, wobei das System eine Steuereinheit (10) enthält, die konfiguriert ist, eine Umwälzung in geschlossenem Kreislauf der Luft im Klimatisierungskreislauf auszulösen, wenn der Fahrer des Fahrzeugs eine erste Klimatisierungs-Betätigungseinrichtung betätigt, **dadurch gekennzeichnet, dass** die Steuereinheit außerdem konfiguriert ist, wenn der Fahrer des Fahrzeugs eine zweite Betätigungseinrichtung betätigt, ohne die erste Betätigungseinrichtung zu betätigen, eine Zwangsumwälzung in geschlossenem Kreislauf der Luft im Klimatisierungskreislauf und durch den Luftfilter hindurch während einer für die zweite Betätigungseinrichtung spezifischen vordefinierten minimalen Dauer und mit einem höheren Durchsatz als bei der Betätigung der ersten Klimatisierungs-Betätigungseinrichtung auszulösen.

10. Verwaltungssystem nach dem vorhergehenden Anspruch, das außerdem eine Erfassungseinheit (20) einer Gefahr des Beschlagens der Scheiben des Fahrzeugs enthält, wobei die Steuereinheit (10) konfiguriert ist, den Start der Zwangsumwälzung in geschlossenem Kreislauf der Luft im Klimatisierungskreislauf während der vordefinierten minimalen Dauer zu annullieren, wenn die Gefahr des Beschlagens höher als eine Schwelle ist.

## Claims

1. Method for managing the distribution of air in the passenger compartment (7) of a motor vehicle, the passenger compartment comprising an air conditioning circuit equipped with a blower (2), with an air filter (25), with a conditioning exchanger (9) designed to modify at least one physical characteristic of the air passing through the exchanger (9), in which method a forced circulation of air in the conditioning circuit and through the air filter (25) by means of the blower (2) is triggered if the driver of the vehicle actuates a first air conditioning control (24), **characterized in that**, if the driver of the vehicle actuates a second control (19) separate from the first control (24), a closed-circuit forced circulation of air in the conditioning circuit, that passes through the air filter, is triggered for a predefined minimum duration specific to the second control and at a flow rate higher than during the actuation of the first conditioning control (24).

2. Management method according to Claim 1, in which, when the second control (19) is actuated, a closed-circuit forced circulation of air in the conditioning circuit is not triggered as long as predefined conditions regarding the hygrometry of the air in the passenger compartment, the temperature of the air inside the passenger compartment and the temperature of the air outside the passenger compartment, which conditions correspond to a risk of fogging on the windscreen, are all met.

3. Management method according to Claim 1, in which, when the second control (19) is actuated, a closed-circuit forced circulation of air in the conditioning circuit is not triggered as long as a third control (21), which is designated to the driver as making it possible to improve visibility through the windscreen of the vehicle, is activated.

4. Management method according to one of Claims 2 and 3, in which a message is displayed (47) for the attention of the driver of the vehicle if, when actuating the second control (19), the conditions that allow the closed-circuit forced air circulation in the conditioning circuit for the predefined minimum duration to be triggered are not all met.

5. Management method according to any one of the preceding claims, in which the closed-circuit forced circulation of air in the conditioning circuit for the predefined minimum duration is furthermore triggered if a detector of the quality of air in the passenger compartment detects an air quality value that crosses a predefined threshold.

6. Management method according to any one of the preceding claims, in which, at the start of triggering of the closed-circuit forced circulation of air in the conditioning circuit for the predefined minimum duration, the flow rate of air from the blower is increased for at least a few seconds (Δt1) above the mean flow rate intended for the predefined minimum duration so as to make the difference in blower operating speed audible to the occupants of the vehicle.

7. Management method according to any one of the preceding claims, in which the forced circulation of air in the conditioning circuit, for the predefined minimum duration, occurs by default in closed circuit, yet on the other hand occurs with partial recycling of air from the passenger compartment for particular combinations of passenger compartment air hygrometry conditions, conditions regarding the temperature of the air outside the passenger compartment and of the air inside the passenger compartment.

8. Management method according to any one of the preceding claims, in which the forced circulation of air in the conditioning circuit during the predefined minimum duration is not started if the temperature of the air outside the vehicle is negative.

9. System for managing the distribution of air in the passenger compartment of a motor vehicle, comprising an air filter (25) and an air conditioning circuit fitted with a blower (2), a conditioning exchanger (9) designed to modify at least one characteristic of the air passing through the exchanger (9), and an air circuit making it possible, by means of the blower, to force the air to circulate in closed circuit inside the passenger compartment by passing through the air filter, the system comprising a control unit (10) configured to trigger a closed-circuit circulation of the air in the conditioning circuit if the driver of the vehicle actuates a first air conditioning control, **characterized in that** the control unit is further configured, if the driver of the vehicle actuates a second control without actuating the first control, to trigger a closed-circuit forced circulation of air in the conditioning circuit and through the air filter for a predefined minimum duration specific to the second control and at a flow rate that is higher than during actuation of the first conditioning control.

10. Management system according to the preceding claim, further comprising a detection unit (20) detecting a risk of fogging of the windows of the vehicle, in which system the control unit (10) is configured to cancel the starting of the closed-circuit forced circulation of air in the conditioning circuit for the predefined minimum duration if the risk of fogging is above a threshold.
